# EUROPEAN PATENT APPLICATION

(11) **EP 4 398 350 A1**
(43) Date of publication of application: **10.07.2024**
(21) Application number: 22864695.6
(22) Date of filing: 01.09.2022
(51) Int. Cl.: H01M 6/12, H01G 11/08, H01G 11/26, H01M 4/06

(54) **BATTERY HAVING ELECTRONIC CONDUCTION FUNCTION VIA ELECTRIC DOUBLE LAYER CAPACITOR**

(30) Priority: 01.09.2021 JP 2021142108; 01.09.2021 JP 2021142109
(71) Applicant: Cross Technology Labo Co., Ltd., Aizuwakamatsu-shi, Fukushima 965-0053 (JP)
(72) Inventor: SASO Mitsuhiro, Himeji-shi, Hyogo 670-0974 (JP)
(74) Representative: AOMB Polska Sp. z.o.o.
(86) International application number: PCT/JP2022/032993
(87) International publication number: WO 2023/033113

(57) **Abstract**

The present invention provides an ionic conductive battery that exhibits an electron conductivity via a micro-capacitor formed between battery electrodes, wherein the ionic conduction battery comprises a dipole micro-capacitor containing hydrogen peroxide and being formed between a cathode electrode made of copper or alloy thereof and an anode electrode made from a metal or an alloy that forms an electrode potential difference, the electrode potential of the anode electrode being more base than that of the cathode electrode, and said micro-capacitor forming a structure that exhibits a property via which electrons flow from the cathode electrode to the anode electrode. Said ionic conduction battery causes current amplification that resembles avalanche amplification.

## Description

### [Technical Field]

The present invention relates to a battery or cell for generating electromotive force by ion conduction function together with new electron conduction function in an electrolyte solution, and more particularly, to an ionic conductive battery or cell having further electron conductivity from a cathode electrode to an anode electrode via an electric double layer formed between the anode electrode and the cathode electrode in close proximity to each other.

### [Background of the Invention]

In order to improve battery performance, firstly, 1) there is proposed a means for increasing an electrode potential difference which is useful for increasing an electromotive force, so that a lithium-ion battery has been proposed. Secondly, 2) As other improvements to the battery, there is proposed a means for reduction in internal resistance that affects the terminal voltage of the battery. In addition, thirdly, 3) there is further proposed a means for activating the electrode reaction by the configuration of the electrode. For example, in a fuel cell using hydrogen peroxide, since the metal electrode catalyzes a disproportionation reaction of H₂O₂ to H₂O and O₂, there has been proposed that a PEDOT (poly(3,4-ethylenedioxythiophene)) is used as a cathode, while a nickel mesh is used as an anode so as not to cause a loss due to the disproportionation reaction (Non-Patent Document 1). It has been also proposed to use copper hexacyanoferrate (CuHCF) as the cathode electrode and Ni grids as the anode electrode (Non-Patent Document 2). However, since these new electrodes have a problem in mass productivity, the present inventor has proposed to simplify the electrode configuration by paying attention to the catalytic function of copper or an alloy thereof as a cathode in the air cell or the fuel cell, and did try to use a copper electrode as the air cathode electrode in the air cell, instead of a carbon electrode (Patent Document 1). In such electrodes, it has been discovered that when hydrogen peroxide is used instead of oxygen in the air, there is exhibited a function or performance peculiar to the electric double layer formed at the interface between the copper or copper electrode and the electrolyte solution. That is, since hydrogen peroxide is a dipole compound and has a high dipole efficiency, it has been found that, when an electrolyte containing hydrogen peroxide is used although the electrolyte has an ionic conductive property while both electrodes have an electron conductive property in the battery or cell, a dipole electric double layer is formed between electrodes and the electrolyte, and a separator-less battery can be formed without short-circuiting even if a pair of electrodes are brought close to each other (Patent Document 2). Then, when the cathode electrode close to the anode electrode is configured to contact locally via a dipole electric double layer, the dipole electric double layer comes to form a micro-capacitor (that is a capacitor in the nano-order region). When the charge of a certain amount or more is accumulated in the micro-capacitor, an electron conduction effect happens through the electric double layer, so that a phenomenon where electrons flow from the cathode electrode side to the anode electrode side was found. Further, it is thought that the dipole electric double layer formed at the interface between the electrode and the electrolytic solution resembles a structure where a P-type semiconductor and a N-type semiconductor are faced each other with the depletion layer interposed therebetween, and as a result, when electrons flow into the depletion layer, there is found a phenomenon in which avalanche amplification occurs.

In general, an ionic conductive battery or cell comprises an anode electrode and a cathode electrode which are opposed to each other via an electrolytic solution and connected by an external circuit, so that an electromotive force is generated by an electrode potential difference between both electrodes, and an electron exchange is performed by a reaction where electrons are received by an oxidation reaction at an interface between the electrode and the electrolytic solution on the anode side and also by a transfer reaction of electrons for a reduction reaction at an interface between the electrode and the electrolytic solution on the cathode side, and a current is generated from the cathode to the anode by ion conduction in the electrolytic solution. Thit is a general function in the battery using the electrolytic solution, so it can be said that the battery using the electrolyte is an ion conductive battery or cell.

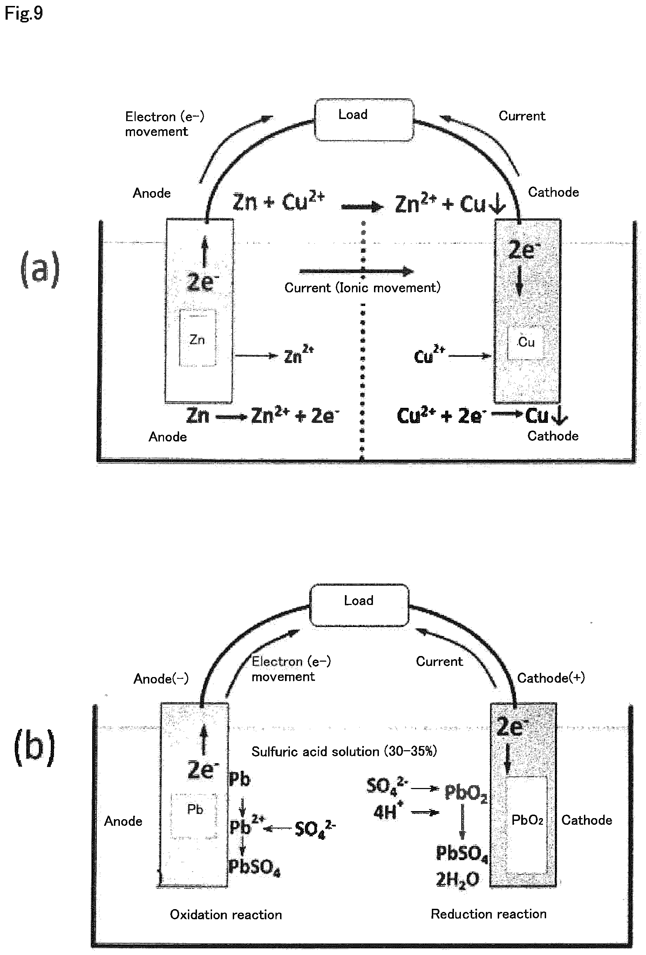

For example, in 1) the traditional Daniel battery, as shown in Fig.9 (a), a copper plate is used in an aqueous solution of copper sulfate, while a zinc plate is immersed in an aqueous solution of zinc sulfate, and both electrodes are opposed to each other via a semipermeable membrane capable of transferring ions between the solutions, and the copper plate and the zinc plate are connected by an external circuit, and the following reaction is performed.
Zinc plate side: Zn (s) → Zn²⁺+2e-
Copper plate side: Cu²⁺+2e→Cu (s) ↓

2) In a traditional lead-acid battery, as shown in FIG. 9(b), an aqueous sulfuric acid solution is used. There, the following reaction happens.
Pb electrode side: the oxidization reaction of Pb(s)+ SO4²⁻→PbSO4(s)+ 2e-
PbO2 electrode side: the reduction reaction of PbO2(s)+ 4H⁺+SO4²⁻+2e-→PbSO₄(s)+2H₂O

The charge and discharge reaction happen in an acidic electrolyte through the ionic migration.

3) In a traditional Li ion cell, the following reaction happens.

The lithium surface: Oxidation of Li (s) →Li⁺+e-

The manganese oxide: Reduction of 2MnO₂(s)+ Li⁺+e-→ LiMn2O4

The charge and discharge reaction happen in the electrolyte with the transfer of Li ions. 4) In a hydrogen fuel cell, on the hydrogen side, an oxidation of 2H₂ (g) → 4H⁺+4e- happens while on the air side, a reduction happens where oxygen in the air reacts with the electrons transferred from the hydrogen side, and reacts with the diffused hydrogen ions to form water.

As described above, in various batteries or cells using an electrolytic solution, electrons move from the anode side to the cathode side through the external circuit, but the active material or ions move from the cathode electrode to the anode electrode via the electrolytic solution, and the electromotive force E is generated by the electrode potential difference between the pair of electrodes. Therefore, since the electrolyte solution is an ion conductor, the transfer of energy is due to ion conduction. Therefore, the ionic conductivity governs the internal resistance R of the battery or cell. As a result, in order to increase the output voltage V, it is necessary to reduce the internal resistance R, but there is a limit because it is dominated by the mobility of ions performing ion conduction.

### [Prior art documents]

### [Patent Document]

[Patent Document 1] Japanese Patent Application No. 2021-142110
[Patent Document 2] Japanese Patent Application No. 2021-073490

[Non-Patent Document 1] Chemical Communications, 2018, Vol.54, Pages 11873-11876
[Non-Patent Document 2] Journal of Hydrogen Energy, ELSEVIER, Vol.45, Issue 47, 25 September 2020, Pages 154-165
[Non-Patent Document 3] Eiji Minato: Advances in Physical Chemistry (1936), 10(3); Pages 154-165

### [Summary of the invention]

### [Problem to be solved by the invention]

The conventional ionic battery or cell has a problem that how the internal resistance R can be reduced. Therefore, for reducing the internal resistance R of the battery, the present invention has an object to provide electronic conductivity through an electric double layer formed at an interface between the electrode and the electrolytic solution, under taking the view of ion conduction in the various batteries using the electrolytic solution into account and as a result of intensive research, this invention has been achieved.

### [Means for solving the problem]

The present invention relates to an ion conductive battery having electronic conduction function via electronic double layer capacitor which comprise an anode electrode and a cathode electrode which are electron conductors. The both electrodes are connected to each other by an external circuit, while both electrodes are opposed to each other via an electrolytic solution which is an ion conductor and not work as electron conductor, so as to generate an electromotive force by an oxidation reaction at the anode electrode of an active material and a reduction reaction at a cathode electrode.

In this invention, a plurality of protrusion electrodes is provided at regular intervals along the plane direction on the cathode surface in a manner to protrude in a direction against the anode electrode surface. The protrusion electrode is brought close facing to the anode electrode surface, so that the protrusion electrode tip of the cathode electrode and the anode electrode surface form an electric double layer capacitor therebetween. As a result, the ionic conductive battery becomes to have an electron conductivity through the electric double layer capacitor. It is very amazing in the ionic conductive battery or cell.

### [Effect of the Invention]

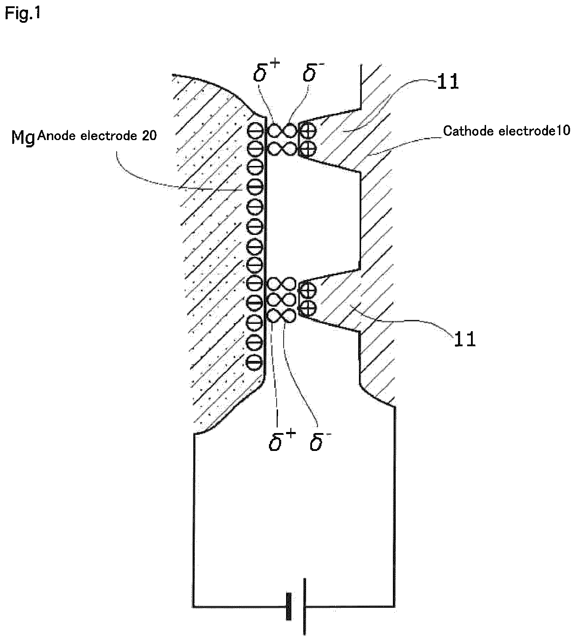

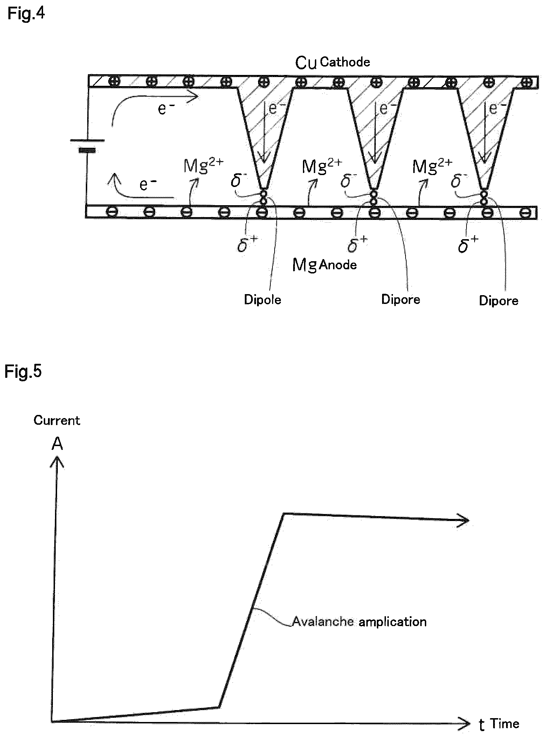

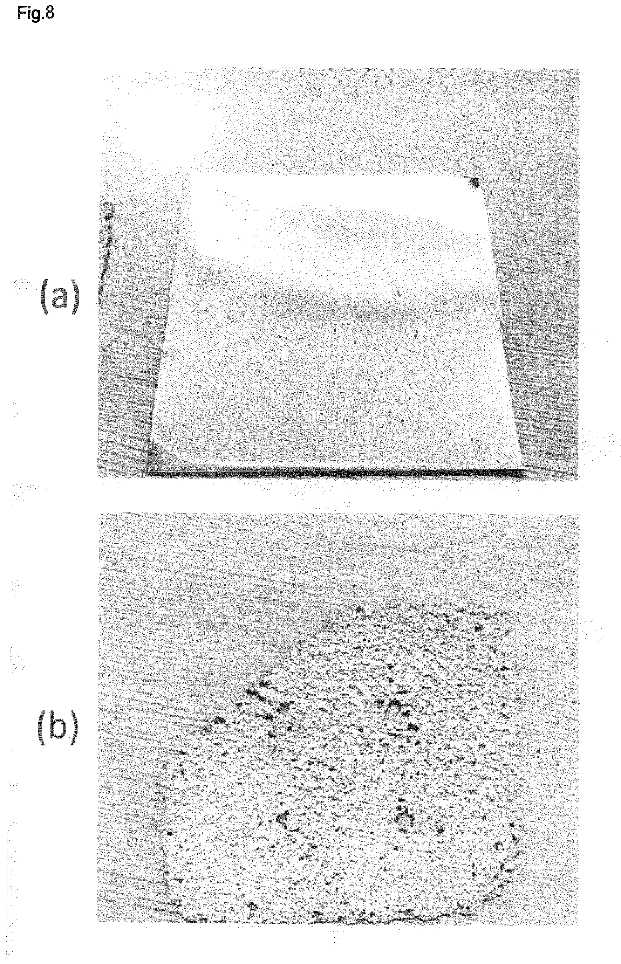

According to the present invention, in addition to the ionic conductivity in the electrolytic solution, it is possible to impart electronic conductivity to the battery. That is, according to the present invention, the protrusion of the cathode electrode is brought close to the opposite anode electrode surface, and an electric double layer capacitor (referred to as a micro-capacitor in this case) is formed between the protrusion electrode tip of the cathode electrode and the anode electrode surface (see FIG. 1), but electrons are collected on the cathode electrode side and stored as shown in FIG.4, and as a result, it is considered that the electron conduction state is reached. Although the cathode electrode and the anode electrode are not conductive at first, after a while, electrons having a negative charge start to flow from the protrusion tip of the cathode electrode to the anode electrode surface, and exhibit electron conductivity. That is, as shown in FIG. 4, the portion close to the counter-electrode aluminum electrode plate, electrons are concentrated and flow from the protrusion tip of the copper electrode. It is considered that a hole is formed by the above electron flow mechanism (see FIG.8(a) and 8 (b)). Thereafter, it is considered that the aluminum electrode is rapidly electrolyzed by electron colliding with the atoms of the aluminum electrode. The uneven state is observed around the hole as if the powder was blown on the surface of the aluminum electrode. That is, it is estimated that a kind of avalanche amplification effect appears from the relationship with the increase in the amount of current shown in FIG. 5.

As shown in FIG. 1, it is thought that such electron conductivity appears due to the formation of an electric double layer capacitor between the protrusion tip of the cathode electrode and the anode electrode and the breakdown of the capacitor. It is very mysterious that the phenomenon (electron conductive function) appears where electrons flow from the cathode electrode side to the anode electrode side. The electron conduction can be thought due to the following phenomenon. One is that electrons collected on the cathode electrode side flow toward positive charges such as metal ions formed on the anode electrode side surface together with an increase of the electric field. In addition, although a tunneling phenomenon is also conceivable, the dipole electric double layer formed at the interface between the electrode and the electrolyte is similar to a structure in which the P-type semiconductor and the N-type semiconductor are constructed in a manner to face each other via a depletion layer, and as a result, it is also guessed that the dipole electric double layer causes a phenomenon in which electrons flow into the depletion layer to make avalanche amplification. In summary, it is found that a battery having ion conduction can be developed by the electron conduction, so that the internal resistance R of the battery dominated by ion conduction is rapidly lowered (FIG. 5).

In the present invention, it is preferable that the electrolytic solution contains a dipole compound represented by hydrogen peroxide, so that it is preferable that a dipole electric double layer is formed on the anode electrode surface from the cathode electrode tip.

Further, in the present invention, it is preferable that the cathode electrode is made of copper or an alloy thereof because it has a catalytic function of promoting the decomposition of hydrogen peroxide. On the other hand, the anode electrode is preferably made of magnesium, aluminum, zinc, and an alloy thereof, since the electrode potential with respect to the cathode electrode is ensured. When the alkaline electrolytic solution contains a dipole compound such as hydrogen peroxide, the electric double layer becomes preferably a dipole electric double layer, which tends to have such a capacitor effect. The hydrogen peroxide is preferably supplied using hydrogen peroxide solution and/or sodium percarbonate.

### [Brief Description of the Drawings]

[Fig. 1] It is a conceptual diagram of a micro-capacitor of the present invention.
[Fig. 2] It is a conceptual diagram of an air cell to be provided with the micro capacitor of the present invention.
[Fig. 3] (A) is a perspective view of the configuration of the copper electrode constituting the micro-capacitor according to the present invention, (B) is a cross-sectional view of the combined state of the magnesium electrode and the copper electrode.
[Fig. 4] It is a conceptual diagram of a battery formed with a large number of micro-capacitors according to the present invention.
[Fig. 5] It is a graph showing a power generation state in the case of applying the micro-capacitor to a magnesium air battery according to the present invention.
[Fig. 6] (A) is a perspective view of a configuration of a copper electrode of a battery having an electric double layer capacitor, and (B) is a cross-sectional view of a combination state of a magnesium electrode and a copper electrode.
[Fig. 7] (a) is a perspective view of a copper cathode electrode having four protruding electrodes on the copper electrode surface, (b) is a cross-sectional view of the electrode configuration in which the aluminum anode electrode is sandwiched between the copper electrodes of Fig.7(a).
[Fig. 8] (a) shows a photograph of an aluminum electrode plate before use in combination with a copper electrode of FIG. 7(a) and (b) is a photograph after use in combination with a copper electrode of FIG. 7(a).
[Fig. 9] (a) is a principle diagram of a conventional Daniel battery, and (b) is a principle diagram of a conventional lead acid battery.

### [Mode for carrying out the invention]

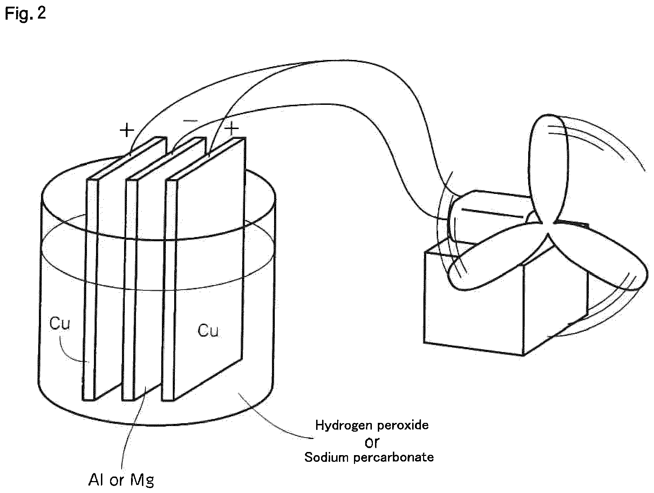

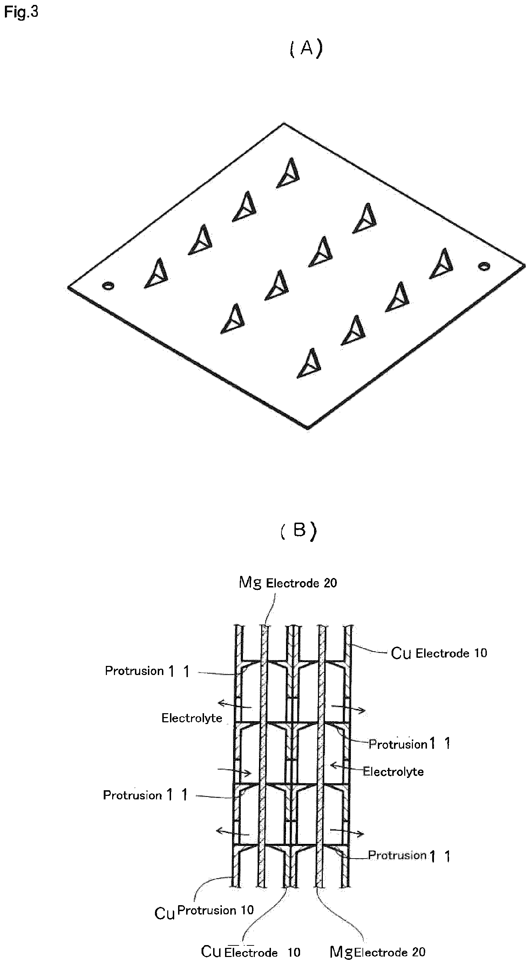

As shown in FIG. 2, Mg or Al anode electrode plate and Cu cathode electrode plate are immersed in an alkaline electrolyte solution containing hydrogen peroxide to face each other. Then, as shown in FIG. 3 (A), the copper electrode 10 is partially cut out in a shape of triangle and raised up at right angles to the electrode surface to form a protruding electrode 11 of an acute triangle having a height of 5 to 15mm, so that the front end is opposed in soft contact with the magnesium electrode surface. Distances mediated by at least one dipole molecule are preferred. The protruding electrodes may be spaced apart by a distance from 150mm to 200mm to allow electrons to flow in the cathode electrode from the surrounding area.

In a battery comprising an anode electrode/an alkaline electrolyte ontaining hydrogen peroxide /cathode electrode, the reaction is as follows:
the anodic oxidation-reaction: 4/3Al→4/3Al³⁺ +4e-
Or 2Mg→2Mg²⁺+4e-
On the other hand, the cathode-side reduction: O₂+H₂O+4e-→4OH-.

In the present invention, in order to accelerate the reduction reaction on the cathode side in the metal-air battery, hydrogen peroxide was added to the electrolytic solution to solve the reason why the ionization progress rate of the cathode side positive electrode is inferior to that of the anode side negative electrode.

In other words, the metallic copper dissolves partially as shown in

Cu+H₂O₂→Cu²⁺+OH+OH-and Cu+OH→Cu+OH-.

and it is thought that some hydrogen peroxide are accelerated to be decomposed by a HO₂ group according to Haber u. Willstatter chain reaction as shown in Cu²⁺+HO²⁻→Cu+2HO₂ (Non-Patent Document 3).

In addition, according to the present invention, the electric double layer formed on the surface of the cathode electrode includes hydrogen peroxide and is formed by the dipole function thereof, and thus has an ion permeable separator function. Therefore, the anode electrode of the counter electrode is not short-circuited even when in contact with the cathode electrode.

On the other hand, when the contact of the opposite anode electrode and the cathode electrode is formed by protrusions or the like arranged in a dotted manner at regular intervals, it will have an electric double layer capacitor structure at the tip of the point-like protrusions (FIG. 1), a large number of spots as a micro-capacitor are positioned on the electrode surface, so that the electron is collected by the electron conduction effect and flows, like the avalanche amplification (FIG. 5).

Comparing the same electrode configuration without a micro-capacitor shown in Fig, 6(a) and (b), the present invention shown in Fig.3(a) and (b), will exhibit a power generation capacity of more than 2 times from 30%.

In the present invention, it is preferable that a part or all of hydrogen peroxide is supplied to the aqueous electrolytic solution by sodium percarbonate. Specifically, the alkali aqueous solution may contain 0.5 to 2.0 mol of an alkali metal or alkaline earth metal halide salt. Particularly, a few percent to a few tens of percent hydrogen peroxide solution (by volume %) or sodium percarbonate (by weight %) is preferably added to a neutral or alkaline aqueous solution containing sodium chloride.

The anode electrode may be made of magnesium or an alloy thereof instead of aluminum.

(-) Mg/NaCl+H₂O₂/Cu (+) cell configuration provides the decomposition potential required to decompose hydrogen peroxide or the hydroxyl radicals.. Mg/Al/Zn alloy of MAZ61 or MAZ31 can be used as magnesium alloy-electrode.

The anode electrode and the cathode electrode are alternately opposed to each other with a constant distance therebetween via a spacer, and an electric double layer capacitor is formed by a water-soluble electrolytic solution containing hydrogen peroxide between the anode electrode and the cathode electrode, but the spacer may be preferably made of the same metal copper or copper alloy as the cathode electrode, and has a dotted protrusion spaced at a constant distance from the surface of the counter electrode (FIG. 3) is preferable. Micro-capacitors have a dipole efficiency greater than or equal to 2.0e.s.u.×15 power to 10 (10¹⁵). The cathode electrode and the anode electrode may be opposed to each other with a distance of the nm order of one molecule of the hydrogen peroxide, so that electrons are concentrated on the triangular electrode protruding from the cathode electrode surface and flow from the cathode electrode to the anode electrode local portion.

### [Examples]

As shown in Fig.2, this is a typical ionic battery comprising a Al or Mg anode electrode and a Cu cathode electrode immersed in an electrolyte solution containing hydrogen peroxide or sodium percarbonate and both electrodes are connected with an external load. In this example, the ionic conductive battery is provided with the copper electrode shown in FIG. 3 (A) which is assembled with the anode electrode as shown in FIG. 3 (B) to construct an ionic conductive battery having electronic conductive function with the concept of a micro-capacitor shown in FIG. 1.

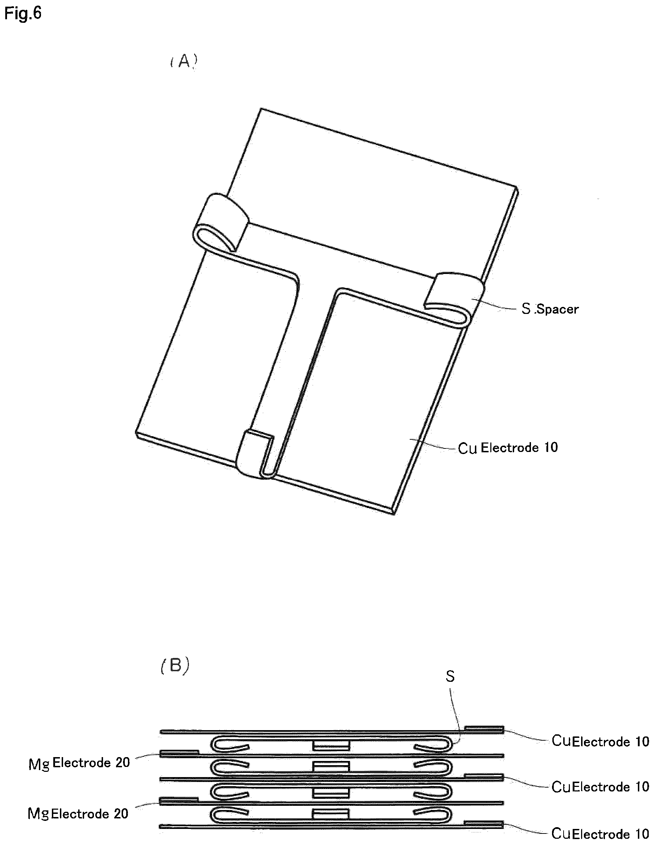

As shown in FIG. 2, an upper open plastic container with a volume 3000ml is used. As shown in FIG. 3(A), the copper cathode electrode plate 10 having 1mm thickness and 100×100mm is used where many triangle protrusions 11 having the height of the 50 or 100mm are made with 150mm to 200mm spacing. As shown in 3B, 4 copper cathode plates 10 and 2 Mg anode electrodes 20 are stacked as follows. Both end copper plates 10 are positioned in a manner to set the protrusions 11 inward, while the center copper cathodes are assembled by a stacking manner of back to back to make the protrusions projected outward in both side directions. The magnesium anode electrode plates 20 have 2mm thickness and the vertical and horizontal length 100×100mm (100cm²) are sandwiched by the end copper plate 10 and the center copper plate 10. Using this combined electrode, a micro-capacitor can be formed on the surface of the copper cathode electrode, as shown in FIG. 1. On the other hand, as shown in FIG. 6A, a T-shape spacer S is made by cutting the copper electrode plate and bending the end portion of T and attached on the copper cathode electrode plate 10 having a 1mm thickness and an aspect 100×100mm (100m²). The Mg anode electrode plate 20 having a 2mm thickness in the vertical and horizontal 100×100mm (100m²) are sandwiched by the cathode electrode plate through the spacer S. In three copper cathode electrode plates 10, two Mg anode electrode plates 20 are alternately sandwiched by spacers S (see FIG. 6B). These combined electrodes do not form a micro-capacitor.

About 0.5 mol /l or more, preferably 1.5 mol /l or more to 2 mol /l of sodium chloride is added to pure 1500ml water, to which sodium percarbonate 50~ 100g and 30% hydrogen peroxide 50ml are added.

After a certain period of time, hydrogen peroxide is consumed and the current is reduced, so 10ml of 30% hydrogen peroxide solution is added every 2-3 hours.

In the present embodiment, the battery having the electrode configurations of Fig. 3A and 3B was compared with the battery having the electrode configurations of Fig. 6A and B with respect to the performance. That is, the battery without micro-capacitor was compared with the battery with the micro-capacitor formed on the protrusion of the copper cathode electrode and the magnesium anode electrode Since the same conditions are applied except for the electrode configuration, the hydrogen peroxide fuel cell reaction in the alkaline electrolyte water is accompanied by the magnesium air cell reaction. Thus, based on the following equation:
In addition to the decomposition of hydrogen peroxide;

   H₂O₂+2H₂O+2e-→2H₂O+2OH-and
the oxidation of H₂O₂+2OH-→O₂+2H₂O+2e- at the cathode,
Metallic oxidation is Mg→Mg²⁺+2e-in the alkaline electrolyte, and oxygen is generated at the cathode.

This is a typical metal-air cell reaction occurs as shown in the reaction: O₂+2H₂O+4e-→4OH-, in which the reaction is reduced and ionized. However, it can be understood that the oxygen gas is generated in the hydrogen peroxide fuel cell and the metal air cell reaction, but not only the oxygen gas but also the hydrogen gas can be generated in the above configuration. That is, as suggested in Non-Patent Document 3 (Eiji Suito, Physicochemical Advancement (1936), 10(3):154-165), the catalytic function works on the surface of the copper cathode electrode, and decomposition of hydrogen peroxide or decomposition of hydroxy ions occurs, and it seems to lead to a new power generation reaction as follows.

2H₂O₂→4 • OH→H₂+O₂+4e-

4OH-→H₂+O₂+4e-

Considering the above experimental results, it has been found that the fuel cell having the micro-capacitor shown in FIG. 3 shows an increase in the current value of 2 times or more as compared with the fuel cell having no micro-capacitor shown in FIG. 6, depending on the configuration having the micro-capacitor.

It can be seen that the current collecting and discharging effect associated with the micro-capacitor has a large influence on the power generation amount of the battery. Therefore, the configuration of the present invention is epoch-making because it is possible to provide a novel and useful configuration as a hydrogen peroxide fuel cell having a one-compartment structure.

### (Electronic Conductivity of the Invention)

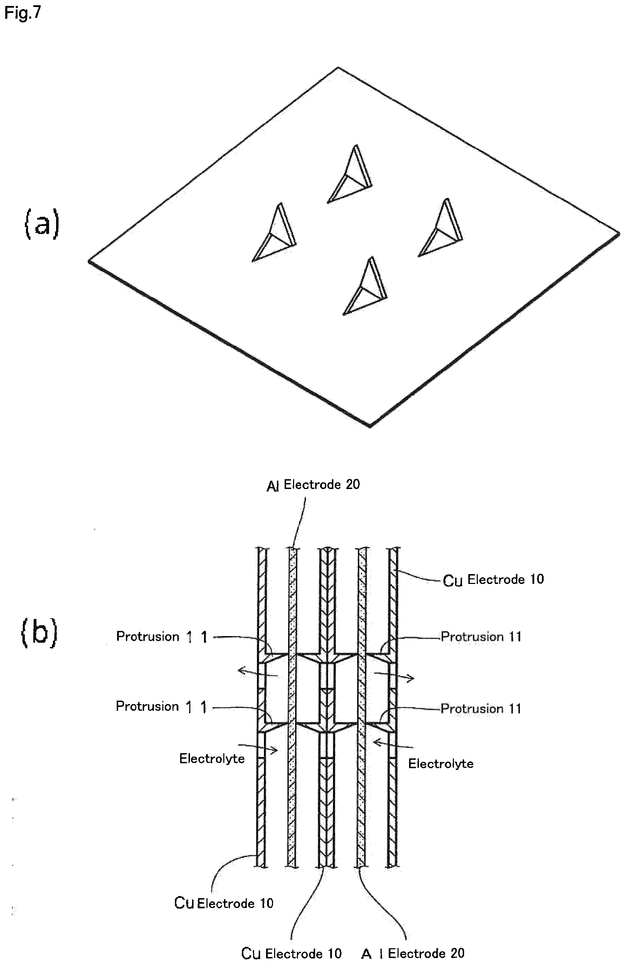

Electronic conductivity manifested via an electric double layer capacitor (micro-capacitor) in the present invention is a surprising phenomenon in batteries operating with ionic conductivity. Figures 8(a) and (b) show the results. The aluminum plate is shown in FIG. 8 (a) as follows. It has a thickness of 1.5mm, and 15cm square, and as shown in FIG. 7A, the copper electrode is provided with four protrusions which is combined with Mg anode electrode to form a battery construction as shown in FIG. 7B. An electric double layer micro-capacitor is formed between the tip of the protrusion of the copper electrode and the aluminum electrode plate, and electrons are collected on the cathode side, and when a constant charge is accumulated, the electron conductivity with the anode side is exhibited, so that electrons start to flow to the anode electrode side. This is called "the electron conductivity or electron conduction function of the ion conductive battery" in the specification. In a battery using an electrolyte mainly containing ion conduction, such a phenomenon is surprising, and as shown in FIG. 8B, four holes are formed in the aluminum electrode opposed to the protrusion on the copper electrode side, and a rough electrode surface such as a powder is formed around the holes. It is presumed from this that the phenomenon (electron conduction) in which electrons discharge from the protrusion on the copper electrode side to the aluminum electrode surface occurs, and the electrons reaching the aluminum electrode collide with the surrounding metal atoms and excite one after another, thereby exhibiting an avalanche effect as shown in Fig.5. Although the electrode configuration of FIGS. 3 and 6 is a case where magnesium is used for the anode electrode, it is important that there is the reason why the amount of power generation increases with the presence of protrusions on the copper electrode.

## Claims

1. An ionic conductive battery or cell having an electron conduction function via an electric double layer capacitor, comprising an anode electrode and a cathode electrode, both having an electron conductive property ,which are connected to each other by an external circuit with load, while the anode electrode and the cathode electrode are opposed to each other via the electrolytic solution having an ion conductive property, where an active material is subjected to an oxidation reaction at the anode electrode while the active material is subjected to the reduction reaction at the cathode electrode to generate an electric power,
wherein the cathode electrode is provided with a plurality of protrusions mounted at regular intervals along the cathode electrode plane in a manner to protrude against the anode electrode surface, so that the protrusion electrode is brought close to the anode electrode surface to form an electric double layer capacitor between the protrusion electrode tip of the cathode electrode and the anode electrode surface so as to make an electron conductive function where electrons flow through the electric double layer capacitor from the protrusion tip of the cathode electrode to the anode electrode surface.

2. The ionic conductive battery or cell according to claim 1, wherein the electron conductive function or conductivity can be realized by bring electrons having a minus charge from the tip of the cathode electrode to metal ions having a plus charge formed at the surface of the anode electrode.

3. The ionic conductive battery or cell according to claim 1, wherein the electrolytic solution contains a dipole compound so as to form a dipole double layer capacity.

4. The ionic conductive battery or cell according to claim 1, wherein the cathode electrode can be made from copper or its alloy while the anode electrode can be made from one selected from a group consisting of Magnesium, Aluminum, Zinc and an alloy thereof, and wherein the electric solution is an alkalic solution containing hydrogen peroxide.

5. The ionic conductive battery according to claim 1, wherein the electric solution contains a dipole compound having a dipole efficiency greater than or equal to 2.0 e.s.u.×15 power to 10 (10¹⁵) to form the dipole electric double layer at an interface between the electrodes in a manner that at least one of the dipole molecule is sandwiched between the cathode electrode and the anode electrode, whereby providing a micro-capacitor having the electron conductive function from the cathode electrode to the anode electrode.
